# EUROPÄISCHE PATENTSCHRIFT

(11) **EP 4 237 703 B1**
(45) Veröffentlichungstag und Bekanntmachung des Hinweises auf die Patenterteilung: **10.12.2025**
(21) Anmeldenummer: 21791344.1
(22) Anmeldetag: 13.10.2021
(51) Int. Cl.: F16H 57/021, F16H 57/029, F16H 57/03, F16H 57/031

(54) **GETRIEBE MIT EINEM GEHÄUSETEIL**
GEAR SYSTEM HAVING A HOUSING PART
SYSTÈME D'ENGRENAGE COMPRENANT UNE PARTIE LOGEMENT

(30) Priorität: 27.10.2020 DE 102020006593
(43) Veröffentlichungstag der Anmeldung: 06.09.2023
(73) Patentinhaber: SEW-EURODRIVE GmbH & Co. KG, 76646 Bruchsal (DE)
(72) Erfinder: BÜHN, Oliver, 76703 Kraichtal (DE); KERSCHBAUM, Martin, 76139 Karlsruhe (DE); TEGELTIJA, Miki, 76689 Karlsdorf-Neuthardt (DE)
(86) Internationale Anmeldenummer: PCT/EP2021/078369
(87) Internationale Veröffentlichungsnummer: WO 2022/089942

(56) Entgegenhaltungen:
- EP-A1- 2 479 454
- CN-U- 211 557 066
- DE-A1- 102012 010 789
- FR-A3- 3 063 124
- JP-A- 2004 150 481

## Beschreibung

Die Erfindung betrifft ein Getriebe mit einem Gehäuseteil.

Es ist allgemein bekannt, dass ein Getriebe ein Gehäuseteil aufweist, welches die mit Öl geschmierten Getriebestufe oder Getriebestufen des Getriebes gehäusebildend und öldicht umgibt.

Aus der US 4 838 123 A ist ein Planetengetriebe bekannt.

Aus der DE 10 2017 203 318 A1 ist eine Getriebe-Antriebsvorrichtung bekannt.

**Aus der** CN 211 557 066 U **ist als als nächstliegender Stand der Technik ein Getriebe bekannt.**

**Aus der** DE 10 2012 010789 A1 **ist ein Getriebe mit zwei Gehäuseteilen und einer zwischengeordneten Dichtung bekannt.**

**Aus der** EP 2 479 454 A1 **ist ein Kegelrad-Bauskastengetriebe bekannt.**

**Aus der** FR 3 063 124 A3 **ist ein Linearaktor bekannt.**

**Aus der** JP 2004 150 481 A **ist ein Lageraufnahme bekannt.**

Der Erfindung liegt die Aufgabe zugrunde, ein Getriebe kompakt und ressourcenschonend, also umweltschonend, auszubilden.

Erfindungsgemäß wird die Aufgabe bei dem Getriebe nach den in Anspruch 1 angegebenen Merkmalen gelöst.

Wichtige Merkmale der Erfindung bei dem Getriebe mit einem Gehäuseteil sind, dass das Gehäuseteil eine zylindrische Innenwand aufweist, welche das mit der abtreibenden Welle des Getriebes drehfest verbundene Rad, insbesondere Verzahnungsteil, wie Zahnrad, radial umgibt,
wobei an der zylindrischen Innenwand voneinander in Umfangsrichtung beabstandete, insbesondere regelmäßig beabstandete, Stege ausgeformt sind, die nach radial innen hervorragen und sich axial erstrecken, insbesondere wobei die Stege in axialer Richtung länger ausgedehnt sind als in Umfangsrichtung und in radialer Richtung.

Von Vorteil ist dabei, dass die zylindrische Innenwand nur eine geringe Wandstärke aufweisen muss und trotzdem mittels der Stege eine hohe Stabilität erreicht. Die zylindrische Innenwand ist erfindungsgemäß als Hohlzylinder ausgeführt und innerhalb eines Außenwandbereichs, insbesondere quaderförmigen Außenwandbereich, angeordnet. Somit ist die Befestigung eines Deckelteils oder Flanschteils mittels Schrauben und/oder Zugstangen in dem insbesondere radial zwischen der zylindrischen Innenwand, also dem Hohlzylinder, und dem quaderförmigen Außenwandbereich ermöglicht. Somit ist die Befestigung radial innerhalb des Außenwandbereichs ermöglicht, also im geschützten Bereich, der aber nicht mit Öl befüllt sein muss und/oder ist. Insgesamt ist somit sehr wenig Material und Bauraum für ein hochstabiles Getriebegehäuse notwendig und daher das Getriebe ressourcenschonend und somit umweltfreundlich herstellbar.

Der Außenwandbereich ist von der Innenwand beabstandet, so dass die Sicherheit erhöht ist. Denn bei Verletzung des Außenwandbereichs tritt noch kein Öl aus. Das Öl ist sozusagen durch eine Doppelwand geschützt angeordnet.

**Erfindungsgemäß** schließt eine Dichtfläche sich an die zylindrische Innenwand an,
wobei die Dichtfläche als konischer Flächenabschnitt ausgebildet ist,
insbesondere wobei die Drehsymmetrieachse des konischen Flächenabschnitts koaxial zur Drehachse der abtreibenden Welle ausgerichtet ist. Von Vorteil ist dabei, dass das Deckelteil dicht verbindbar ist. Durch die konische Ausformung ist ein Einfädeln und die Zentrierung des Deckelteils zum Gehäusedeckel erleichtert ausführbar.

Bei einer vorteilhaften Ausgestaltung schließt der von den Stegen in axialer Richtung überdeckte Bereich sich an den von der Dichtfläche in axialer Richtung überdeckten Bereich an oder ist davon beabstandet, insbesondere überlappt aber nicht mit dem von der Dichtfläche in axialer Richtung überdeckten Bereich. Von Vorteil ist dabei, dass der Dichtring an der Dichtfläche anliegt und von den Stegen axial begrenzt ist.

Erfindungsgemäß weist ein Deckelteil einen ringförmigen Vorsprung auf, wobei das Deckelteil derart mit dem Gehäuseteil verbunden ist, dass der ringförmige Vorsprung an der Dichtfläche anliegt. Von Vorteil ist dabei, dass eine hohe Dichtheit herstellbar ist.

Bei einer vorteilhaften Ausgestaltung weist der ringförmige Vorsprung einen konischen Flächenbereich auf,
insbesondere wobei der ringförmige Vorsprung einen außenkonischen Flächenbereich aufweist, der an der innenkonischen Dichtfläche anliegt, welche an die zylindrische Innenwand angrenzt,
wobei die Drehsymmetrieachse des außenkonischen Flächenbereichs koaxial zur Drehsymmetrieachse der innenkonischen Dichtfläche ausgerichtet ist. Von Vorteil ist dabei, dass ein Einfädeln und Zentrieren erleichtert ist und ein dichtes Verbinden ermöglicht ist.

Bei einer vorteilhaften Ausgestaltung ist die zylindrische Innenwand radial umgeben von einer quaderförmigen Außenwand des Gehäuseteils,
wobei Wandbereiche zwischen der zylindrischen Innenwand und der quaderförmigen Außenwand angeordnet sind, wobei die Wandbereiche mit der zylindrischen Innenwand verbunden sind und mit der quaderförmigen Außenwand verbunden sind. Von Vorteil ist dabei, dass mit geringem Materialaufwand eine hohe Stabilität erreichbar ist. Außerdem schützt die Außenwand auch den Verbindungsbereich, in welchem Verbindungsmittel zum Verbinden eines Deckelteils und eines Flanschteils angeordnet sind. Somit ist nur ein geringes Volumen mit Öl zu befüllen und ein geringer Materialaufwand notwendig.

Bei einer vorteilhaften Ausgestaltung ist der radiale Abstand zwischen der zylindrischen Innenwand und der quaderförmigen Außenwand in Umfangsrichtung zwischen Null und einem Maximalwert veränderlich, insbesondere periodisch veränderlich. Von Vorteil ist dabei, dass das zylindrische Innenwand steif angebunden ist an die Außenwand und stabil gehalten ist von der Außenwand.

Bei einer vorteilhaften Ausgestaltung sind an ersten Wandbereichen (4) erste Dombereiche ausgeformt, in denen jeweils entweder eine axial gerichtete, durch das Gehäuseteil durchgehende Bohrung eingebracht ist oder eine axial gerichtete Gewindebohrung, insbesondere Sacklochbohrung, eingebracht ist. Von Vorteil ist dabei, dass eine einfache stabile Befestigung ermöglicht ist. Außerdem sind die Dombereiche als Verdickungen der Wandbereiche ausgeführt und somit eine erhöhte Stabilität erreichbar. Denn die Wandbereiche verbinden jeweils die radial weiter innenliegende zylindrische Innenwand mit dem quaderförmigen Außenwandbereich.

Bei einer vorteilhaften Ausgestaltung umfasst der von der quaderförmigen Außenwand überdeckte axiale Bereich den von der zylindrischen Innenwand überdeckten axialen Bereich. Von Vorteil ist dabei, dass der Außenwandbereich die Innenwand in Umfangsrichtung vollständig umgibt, also mit anderen Worten radial umgibt. Da auch in axialer Richtung und in entgegengesetzter Richtung der Außenwandbereich die Innenwand überragt, ist diese geschützt angeordnet. Nach Verbinden des Deckelteils und des Flanschteils ist der ölbefüllte Innenraum mit einer erhöhten Sicherheit vorgesehen.

Bei einer vorteilhaften Ausgestaltung ist am Gehäuseteil ein Flanschbereich, insbesondere mit welchem ein antreibender Elektromotor verbindbar ist, angeformt, wobei der vom Flanschbereich umgebene Innenraumbereich durch eine Ausnehmung hindurch in den von der zylindrischen Innenwand umgebenen Innenraumbereich mündet. Von Vorteil ist dabei, dass zwar die Innenwand eine Ausnehmung aufweist; diese Ausnehmung dient aber der Durchführung der eintreibenden Welle und des damit drehfest verbundenen Verzahnungsteils, insbesondere Ritzels. Der von dem Flanschbereich umgebene Innenraumbereich ist also ebenfalls mit Öl zumindest teilweise befüllbar, aber auch abgedichtet gegenüber der Umgebung und gegenüber dem Motor vorgesehen.

Bei einer vorteilhaften Ausgestaltung ragt die vom Elektromotor angetriebene eintreibende Welle des Getriebes samt einem mit dieser Welle drehfest verbundenen Verzahnungsteil, insbesondere Ritzel, zum abtreibenden Rad hervor,
insbesondere wobei die Verzahnung des Verzahnungsteils mit der Verzahnung des Rads im Eingriff steht,
insbesondere wobei das Rad drehfest mit der abtreibenden Welle des Getriebes verbunden ist. Von Vorteil ist dabei, dass ein antreibender Motor direkt mit dem Getriebe verbindbar ist und somit mit dem Getriebe eine Einheit, also einen Getriebemotor, darstellt.

**Erfindungsgemäß** ist ein Dichtring auf den ringförmigen Vorsprung des Deckelteils aufgeschoben und ist axial von den Stegen, insbesondere von der Stirnseite der Stege, axial begrenzt,
wobei der Dichtring auf seiner von den Stegen axial abgewandten Seite vom Deckelteil axial begrenzt ist, insbesondere so dass der Dichtring nur an in Umfangsrichtung voneinander beabstandeten Umfangswinkelpositionen axial begrenzt ist. Von Vorteil ist dabei, dass die Stege nicht nur die Funktion der Erhöhung einer Steifigkeit, sondern auch die Funktion der axialen Begrenzung des Dichtrings ausführen.

**Erfindungsgemäß** weist die in Umfangsrichtung gemessene maximale Wandstärke eines oder mehrerer der Stege als Funktion der axialen Position und/oder als Funktion des in axialer Richtung gemessenen Abstands zur Dichtfläche und/oder zum Dichtring ein lokales Maximum auf,
wobei die axiale Position dieses Wandstärkemaximums in demjenigen axialen Bereich sich befindet, der von dem mit dem Rad im Eingriff stehenden, mit der eintreibenden Welle des Getriebes drehfest verbundenen Verzahnungsteil, insbesondere Ritzel, überdeckt wird,
insbesondere wobei die Drehachse des Rads senkrecht und/oder beabstandet zur Drehachse des Verzahnungsteils ausgerichtet ist. Von Vorteil ist dabei, dass ein Wandstärkemaximum im axial mittleren Bereich eine hohe Steifigkeit mit geringem Materialaufwand ermöglicht.

Dadurch dass dieses Wandstärkemaximum in demjenigen axialen Bereich liegt, der von dem mit dem Rad im Eingriff stehenden, mit der eintreibenden Welle drehfest verbundenen Verzahnungsteil, insbesondere Ritzel, überdeckt wird, werden Schwingungen des Gehäuseteils unterdrückt, welche eine Veränderung der Beabstandung zwischen Ritzel und Rad bewirken könnten. Denn das Wandstärkemaximum stabilisiert den dafür relevanten Bereich des Gehäuseteils.

Bei einer vorteilhaften Ausgestaltung beträgt die Anzahl der Stege mehr als Sieben. Von Vorteil ist dabei, dass ein möglichst geringes Durchhängen des Dichtrings in axialer Richtung ermöglicht ist.

Bei einer vorteilhaften Ausgestaltung sind das Gehäuseteil, umfassend die zylindrische Innenwand, der quaderförmige Außenwandbereich, die Dombereiche, die Wandbereiche und der Flanschbereich einstückig, insbesondere einteilig, ausgeführt. Von Vorteil ist dabei, dass eine einfache Herstellung ermöglicht ist.

Bei einer vorteilhaften Ausgestaltung ist der von der zylindrischen Innenwand umgebene Raumbereich mit Öl zumindest teilweise befüllt,
wobei der zwischen der zylindrischen Innenwand und dem quaderförmigen Außenwandbereich vorhandene Raumbereich gegen den zumindest teilweise mit Öl befüllten, von der zylindrischen Innenwand umgebenen Raumbereich abdichtet. Von Vorteil ist dabei, dass der von der zylindrischen Innenwand umgebene Innenraumbereich mit Öl befüllbar ist und somit die miteinander im Eingriff befindlichen Verzahnungen der Verzahnungsteile mit Öl geschmiert sind. Der Verbindungsbereich des Gehäuseteils mit dem Deckelteil ist radial außerhalb der zylindrischen Innenwand angeordnet und somit außerhalb des Ölbereichs.

Die Erfindung wird nun anhand von schematischen Abbildungen näher erläutert:

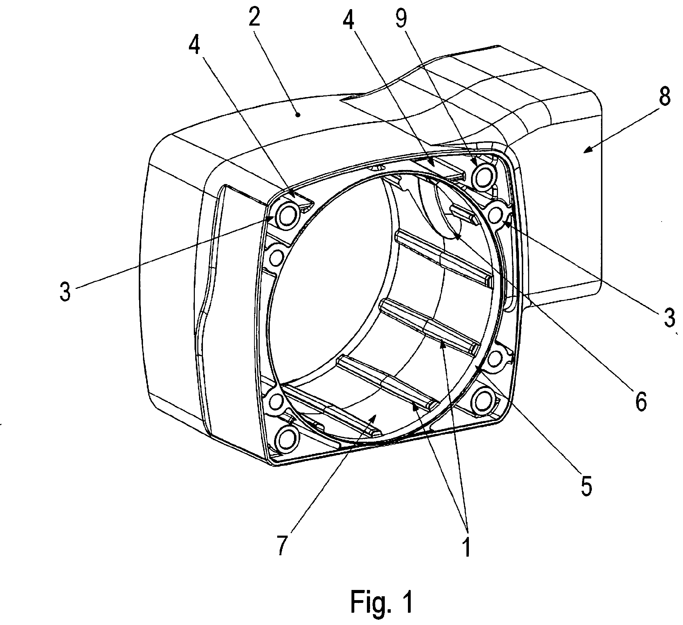

In der Figur 1 ist das Gehäuseteil 2 eines Getriebes in Schrägansicht dargestellt.

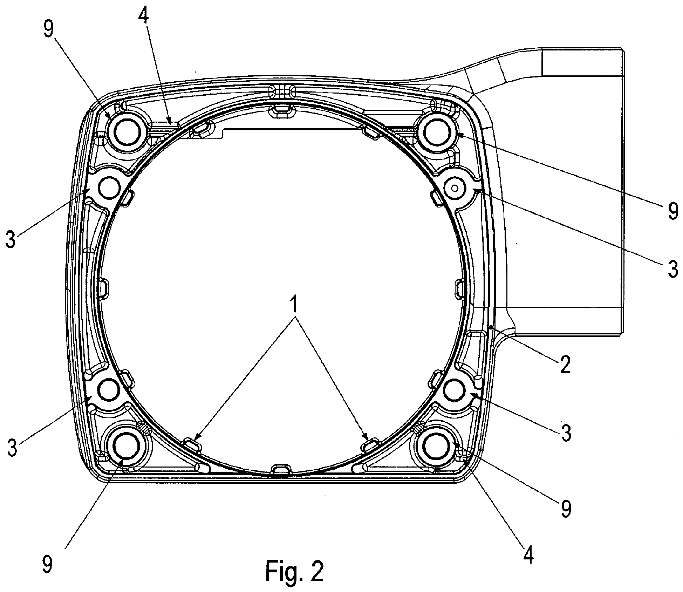

In der Figur 2 ist das Gehäuseteil 2 in Draufsicht dargestellt.

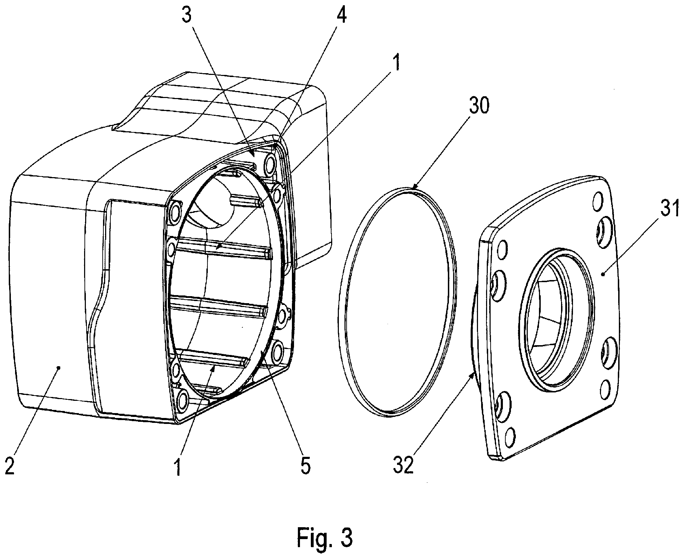

In der Figur 3 ist das das Gehäuseteil 2, einen Dichtring 30 und ein Deckelteil 32 aufweisendes Gehäuse des Getriebes explodiert in Schrägansicht dargestellt.

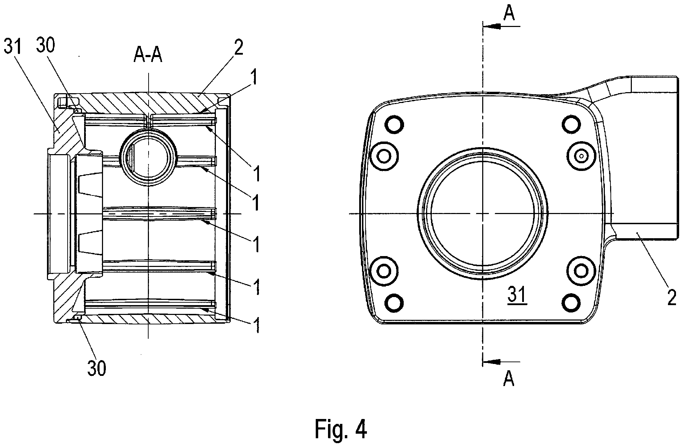

In der Figur 4 ist ein Querschnitt durch das Gehäuse gezeigt, wobei neben dem Querschnitt die Schnittflächenausrichtung an einer Seitenansicht des Gehäuses verdeutlicht ist.

Wie in den Figuren gezeigt, weist das Gehäuseteil 2 einen quaderförmigen Außenumfang auf und eine zylindrische Innenwand 7, welche dem äußeren Umfang des abtreibenden Zahnrads folgt und dieses umgibt.

Erfindungsgemäß sind aber an dieser zylindrischen Innenwand 7 sich axial erstreckende Stege 1 ausgeformt, die nach radial innen hervorragen. Diese Stege 1 sind in Umfangsrichtung voneinander vorzugsweise regelmäßig beabstandet.

Somit ist bei Drehen des abtreibenden Zahnrads eine Verwirbelung des im Innenraum des Getriebes eingefüllten Öls bewirkbar und somit ein verringerter Wärmeübergangswiderstand vom Öl zum Gehäuse.

Außerdem ist die zylindrische Innenwand 7 mit einer verringerten Wandstärke ausführbar, da die Stege 1 zu einer Versteifung beitrage.

Die zylindrische Innenwand 7 ist radial beabstandet von dem quaderförmigen Außenumfang des Getriebes, also einem quaderförmigen Außenwandbereich des Getriebes.

Zur stabilen Anbindung der zylindrischen Innenwand 7 mit dem quaderförmigen Außenwandbereich sind stegförmige Wandbereiche ausgeformt, welche die zylindrische Innenwand 7 mit dem quaderförmigen Außenwandbereich verbindet.

Einer der Wandbereiche 4 weist einen Dombereich 3 auf, der als Verdickung ausgeführt ist und in welchen eine axial sich erstreckende Gewindebohrung eingebracht ist.

In diese Gewindebohrung wird eine durch ein Deckelteil 31 durchgehende Schraube eingeschraubt, deren Schraubenkopf das Deckelteil 31 zum Gehäuseteil 2 hingedrückt wird.

Der Dombereich 3 ist mittels Wandbereichen 4 sowohl mit der zylindrischen Innenwand 7 als auch mit dem quaderförmigen Außenwandbereich verbunden.

Für das Verbinden eines antreibenden Elektromotors weist das Gehäuseteil 2 einen Flanschbereich 8 auf, dessen vom Flanschbereich 8 umgebener Innenraumbereich durch eine Ausnehmung 6 hindurch in den von der zylindrischen Innenwand 7 umgebenen Innenraumbereich mündet.

Somit ragt die vom Elektromotor angetriebene eintreibende Welle samt einem mit dieser Welle drehfest verbundenen Verzahnungsteil zum abtreibenden Rad hervor. Die Verzahnung des Verzahnungsteils steht mit der Verzahnung des Rads im Eingriff. Das Rad ist drehfest mit der abtreibenden Welle des Getriebes verbunden.

Die axiale Richtung, die Umfangsrichtung und Radialabstände beziehen sich hier stets - soweit nicht anders explizit definiert - auf die Drehachse der abtreibenden Welle, die parallel und koaxial zur Symmetrieachse der zylindrischen Innenwand 7 ausgerichtet ist.

Die Stege 1 erstrecken sich in axialer Richtung, so dass also ihre längste Ausdehnung in axialer Richtung erfolgt.

Die Drehachse der eintreibenden Welle ist senkrecht zur Drehachse der abtreibenden Welle ausgerichtet und weist einen nicht verschwindenden Abstand zur abtreibenden Welle auf.

An der zylindrischen Innenwand 7 ist auch eine Dichtfläche 5 ausgebildet, welche konisch ausgeführt ist. Dabei ist die Symmetrieachse des Konus koaxial Drehachse des abtreibenden Rads ausgerichtet.

Am Deckelteil 31 ist ein ringförmiger Vorsprung ausgeformt, der ebenfalls konusförmig ausgebildet ist und bei Aufsetzen und Verbinden des Deckelteils 31 mit dem Gehäuseteil 2 am Konus anliegt.

Ein Dichtring 30 ist auf den ringförmigen Vorsprung 32 aufgeschoben und liegt dann nach Aufsetzen und Verbinden des Deckelteils 31 mit dem Gehäuseteil 2 an der Dichtfläche 5, insbesondere an der zylindrischen Innenwand 7, an, so dass der Dichtring 30 vom Deckelteil 31 auf das Gehäuseteil 2 gedrückt wird.

Der Dichtring 30 ist durch die nach radial innen hervorragenden Stege in dem von den jeweiligen Stegen überdeckten Umfangswinkelbereichen axial begrenzt. Er ist also gehindert, weiter axial einzudringen. Allerdings ist im in Umfangsrichtung zwischen den Stegen vorhandenen Umfangswinkelbereich ein unwesentliches Durchhängen in axialer Richtung bewirkt. Die Dichtheit ist aber dadurch gesichert, dass der Dichtring 30 zwischen dem ringförmigen Vorsprung 32 und der Dichtfläche 5 elastisch verformt wird und daher dicht anliegt.

Das Deckelteil 31 ist somit öldicht verbunden mit der zylindrischen Innenwand 7. Daher ist der von der zylindrischen Innenwand 7 umgebene Raumbereich mit Öl befüllbar. Der zwischen der zylindrischen Innenwand 7 und dem quaderförmigen Außenwandbereich vorhandene Raumbereich ist somit gegen den ölbefüllten von der zylindrischen Innenwand 7 umgebenen Raumbereich abgedichtet.

Der Abstand zwischen dem größten Radialabstand R des Rades und dem kleinsten lichten Radialabstand der Stege 1 beträgt vorzugswiese weniger als 10% des größten Radialabstandes R des Rads.

Einige der Dombereiche 9 sind nicht mit axial gerichteten Gewindebohrungen ausgeführt, sondern mit axial durchgehenden Bohrlöchern zur Durchführung von Zugstangen, mit welchen ein auf der vom Deckelteil 30 abgewandten Seite des Gehäuseteils 2 angeordneter Flanschdeckel mit dem Gehäuseteil 2 verbunden wird. Dabei werden axial beidseitig Muttern auf die Zugstangen aufgeschraubt.

Radial außerhalb der Zentrierfläche ist am Gehäuseteil 2 ein Zentrierbund ausgebildet, der mit einer an dem Deckelteil ausgebildeten Zentrierfläche in Wirkverbindung gebracht ist, also die Zentrierung des Deckelteils zum Gehäuseteil 2 hin ermöglicht.

Bei weiteren erfindungsgemäßen Ausführungsbeispielen wird statt des Dichtrings 30 eine andere Dichtung verwendet.

### Bezugszeichenliste

1 Steg
2 Gehäuseteil
3 Dombereich
4 Wandbereich
5 Dichtfläche
6 Ausnehmung für eintreibende Welle
7 zylindrische Innenwand
8 Flanschbereich
9 Dombereich
30 Dichtring, insbesondere O-Ring
31 Deckelteil
32 ringförmiger Vorsprung

## Patentansprüche

1. Getriebe mit einem Gehäuseteil (2),
wobei das Gehäuseteil (2) eine zylindrische Innenwand (7) aufweist, welche **ein** mit der abtreibenden Welle des Getriebes drehfest verbundene Rad, insbesondere Verzahnungsteil, wie Zahnrad, radial umgibt,
wobei an der zylindrischen Innenwand (7) voneinander in Umfangsrichtung beabstandete, insbesondere regelmäßig beabstandete, Stege (1) ausgeformt sind, die nach radial innen hervorragen und sich axial erstrecken,
insbesondere wobei die Stege (1) in axialer Richtung länger ausgedehnt sind als in Umfangsrichtung und in radialer Richtung, wobei das Getriebe ein Deckelteil (31) mit einem ringförmigen Vorsprung (32) aufweist und wobei sich eine Dichtfläche (5) an die zylindrische Innenwand (7) anschließt,
**dadurch gekennzeichnet, dass**
**die Dichtfläche (5) als konischer Flächenabschnitt ausgebildet ist,**
**wobei ein Dichtring (30) auf den ringförmigen Vorsprung (32) des Deckelteils (31) aufgeschoben ist und axial von den Stegen (1), insbesondere von der Stirnseite der Stege (1), axial begrenzt ist,**
wobei der Dichtring (30) nach Aufsetzen und Verbinden des Deckelteils (31) mit dem Gehäuseteil (2) an der Dichtfläche (5) anliegt, so dass der Dichtring (30) vom Deckelteil (31) auf das Gehäuseteil (2) gedrückt wird,
**wobei der Dichtring (30) auf seiner von den Stegen (1) axial abgewandten Seite vom Deckelteil (31) axial begrenzt ist, insbesondere so dass der Dichtring (30) nur an in Umfangsrichtung voneinander beabstandeten Umfangswinkelpositionen axial begrenzt ist,** und dadurch, dass
**die in Umfangsrichtung gemessene maximale Wandstärke eines oder mehrerer der Stege (1) als Funktion der axialen Position und/oder als Funktion des in axialer Richtung gemessenen Abstands zur Dichtfläche (5) und/oder zum Dichtring (30) ein lokales Maximum aufweist,**
**wobei die axiale Position dieses Wandstärkemaximums in demjenigen axialen Bereich sich befindet, der von dem mit dem Rad im Eingriff stehenden, mit der eintreibenden Welle des Getriebes drehfest verbundenen Verzahnungsteil, insbesondere Ritzel, überdeckt wird.**

2. Getriebe nach Anspruch 1,
**dadurch gekennzeichnet, dass**
**die Drehsymmetrieachse des konischen Flächenabschnitts koaxial zur Drehachse der abtreibenden Welle ausgerichtet ist.**

3. Getriebe nach einem der vorangegangenen Ansprüche,
**dadurch gekennzeichnet, dass**
der von den Stegen (1) in axialer Richtung überdeckte Bereich sich anschließt an den von der Dichtfläche (5) in axialer Richtung überdeckten Bereich oder davon beabstandet ist,
insbesondere nicht aber überlappt mit dem von der Dichtfläche (5) in axialer Richtung überdeckten Bereich.

4. Getriebe nach einem der vorangegangenen Ansprüche,
**dadurch gekennzeichnet, dass**
der ringförmige Vorsprung (32) einen konischen Flächenbereich aufweist,
insbesondere wobei der ringförmige Vorsprung (32) einen außenkonischen Flächenbereich aufweist, der an der innenkonischen Dichtfläche (5) anliegt,
wobei die Drehsymmetrieachse des außenkonischen Flächenbereichs koaxial zur Drehsymmetrieachse der innenkonischen Dichtfläche (5) ausgerichtet ist.

5. Getriebe nach einem der vorangegangenen Ansprüche,
**dadurch gekennzeichnet, dass**
die zylindrische Innenwand (7) radial umgeben ist von einer quaderförmigen Außenwand des Gehäuseteils (2),
wobei Wandbereiche (4) zwischen der zylindrischen Innenwand (7) und der quaderförmigen Außenwand angeordnet sind, wobei die Wandbereiche (4) mit der zylindrischen Innenwand (7) verbunden sind und mit der quaderförmigen Außenwand verbunden sind.

6. Getriebe nach Anspruch 5,
**dadurch gekennzeichnet, dass**
der radiale Abstand zwischen der zylindrischen Innenwand (7) und der quaderförmigen Außenwand in Umfangsrichtung zwischen Null und einem Maximalwert veränderlich ist, insbesondere **periodisch** veränderlich ist.

7. Getriebe nach einem der Ansprüche 5 oder 6,
**dadurch gekennzeichnet, dass**
an ersten Wandbereichen (4) erste Dombereiche (3, 9) ausgeformt sind, in denen jeweils entweder eine axial gerichtete, durch das Gehäuseteil (2) durchgehende Bohrung eingebracht ist oder eine axial gerichtete Gewindebohrung, insbesondere Sacklochbohrung, eingebracht ist.

8. Getriebe nach einem der Ansprüche 5-7,
**dadurch gekennzeichnet, dass**
der von der quaderförmigen Außenwand überdeckte axiale Bereich den von der zylindrischen Innenwand (7) überdeckten axialen Bereich umfasst.

9. Getriebe nach einem der vorangegangenen Ansprüche,
**dadurch gekennzeichnet, dass**
am Gehäuseteil (2) ein Flanschbereich, mit welchem ein antreibender Elektromotor verbindbar ist, angeformt ist, wobei der vom Flanschbereich (8) umgebene Innenraumbereich durch eine Ausnehmung (6) hindurch in den von der zylindrischen Innenwand (7) umgebenen Innenraumbereich mündet.

10. Getriebe nach Anspruch 9,
**dadurch gekennzeichnet, dass**
**eine** vom Elektromotor angetriebene eintreibende Welle des Getriebes samt einem mit dieser Welle drehfest verbundenen Verzahnungsteil, insbesondere Ritzel, zum abtreibenden Rad hervor**ragt,**
insbesondere wobei die Verzahnung des Verzahnungsteils mit der Verzahnung des Rads im Eingriff steht,
insbesondere wobei das Rad drehfest mit der abtreibenden Welle des Getriebes verbunden ist.

11. Getriebe nach einem der vorangegangenen Ansprüche,
**dadurch gekennzeichnet, dass**
**die Drehachse des Rads senkrecht und/oder beabstandet zur Drehachse des Verzahnungsteils ausgerichtet ist.**

12. Getriebe nach einem der vorangegangenen Ansprüche,
**dadurch gekennzeichnet, dass**
die Anzahl der Stege (1) größer als 7 ist,
und/oder wenn abhängig von einem der Ansprüche 5-7, dass
das Gehäuseteil (2), umfassend die zylindrische Innenwand (7), der quaderförmige Außenwandbereich, die Dombereiche (3, 9), die Wandbereiche (4) und der Flanschbereich (8) sind einstückig, insbesondere einteilig, ausgeführt.

13. Getriebe nach den Ansprüchen 5-7, oder nach Anspruch 12 wenn abhängig von einem der Ansprüche 5-7,
**dadurch gekennzeichnet, dass**
der von der zylindrischen Innenwand (7) umgebene Raumbereich mit Öl zumindest teilweise befüllt **ist,**
wobei der zwischen der zylindrischen Innenwand (7) und dem quaderförmigen Außenwandbereich vorhandene Raumbereich gegen den zumindest teilweise mit Öl befüllten, von der zylindrischen Innenwand (7) umgebenen Raumbereich abdichtet.

## Claims

1. Gearing comprising a housing part (2),
the housing part (2) having a cylindrical internal wall (7) that radially encloses a wheel, in particular a toothed part such as a gearwheel, that is connected to the driven shaft of the gearing for conjoint rotation,
ribs (1) being moulded on the cylindrical internal wall (7), the ribs being spaced apart from one another in the circumferential direction, in particular regularly spaced apart, and protruding radially inwards and extending axially,
the ribs (1) in particular having a longer extension in the axial direction than in the circumferential direction and in the radial direction, the gearing having a lid part (31) that has an annular projection (32), and a sealing face (5) being adjacent to the cylindrical internal wall (7),
**characterised in that**
the sealing face (5) is formed as a conical surface portion,
a sealing ring (30) being pushed onto the annular projection (32) of the lid part (31) and being axially delimited axially by the ribs (1), in particular by the end face of the ribs (1),
the sealing ring (30) abutting the sealing face (5) once the lid part (31) has been placed on and connected to the housing part (2), such that the sealing ring (30) is pressed onto the housing part (2) by the lid part (31),
the sealing ring (30) being axially delimited, on its side facing axially away from the ribs (1), by the lid part (31), in particular such that the sealing ring (30) is axially delimited only at circumferential-angle positions that are spaced apart from one another in the circumferential direction, and **in that**
the maximum wall thickness of one or more of the ribs (1), as measured in the circumferential direction, has a local maximum as a function of the axial position and/or as a function of the distance from the sealing face (5) and/or from the sealing ring (30) as measured in the axial direction,
the axial position of this wall thickness maximum being located in the axial region which is overlapped by the toothed part, in particular the pinion, that is meshed with the wheel and connected to the input shaft of the gearing for conjoint rotation.

2. Gearing according to claim 1,
**characterised in that**
the axis of rotational symmetry of the conical surface portion is oriented coaxially with the axis of rotation of the driven shaft.

3. Gearing according to any of the preceding claims,
**characterised in that**
the region covered by the ribs (1) in the axial direction is either adjacent to or spaced apart from the region covered by the sealing face (5) in the axial direction but in particular does not overlap with the region covered by the sealing face (5) in the axial direction.

4. Gearing according to any of the preceding claims,
**characterised in that**
the annular projection (32) has a conical surface region,
the annular projection (32) in particular having an externally conical surface region that abuts the internally conical sealing face (5),
the axis of rotational symmetry of the externally conical surface region being oriented coaxially with the axis of rotational symmetry of the internally conical sealing face (5).

5. Gearing according to any of the preceding claims,
**characterised in that**
the cylindrical internal wall (7) is radially enclosed by a parallelepiped-shaped external wall of the housing part (2),
wall regions (4) being arranged between the cylindrical internal wall (7) and the parallelepiped-shaped external wall, the wall regions (4) being connected to the cylindrical internal wall (7) and connected to the parallelepiped-shaped external wall.

6. Gearing according to claim 5,
**characterised in that**
the radial distance between the cylindrical internal wall (7) and the parallelepiped-shaped external wall in the circumferential direction is variable between zero and a maximum value, in particular is periodically variable.

7. Gearing according to any of claims 5 or 6,
**characterised in that**
first dome regions (3, 9) are moulded on first wall regions (4), in each of which dome regions there is made either an axially oriented bore passing through the housing part (2) or an axially oriented threaded bore, in particular a blind hole bore.

8. Gearing according to any of claims 5-7,
**characterised in that**
the axial region covered by the parallelepiped-shaped external wall encompasses the axial region covered by the cylindrical internal wall (7).

9. Gearing according to any of the preceding claims,
**characterised in that**
a flange region to which a driving electric motor can be connected is formed on the housing part (2), the internal chamber region enclosed by the flange region (8) opening through a cut-out (6) into the internal chamber region enclosed by the cylindrical internal wall (7).

10. Gearing according to claim 9,
**characterised in that**
an input shaft, which is driven by the electric motor, of the gearing protrudes with respect to the driven wheel together with a toothed part, in particular a pinion, that is connected to said shaft for conjoint rotation,
the toothing of the toothed part in particular being meshed with the toothing of the wheel, the wheel in particular being connected to the driven shaft of the gearing for conjoint rotation.

11. Gearing according to any of the preceding claims,
**characterised in that**
the axis of rotation of the wheel is oriented perpendicularly to and/or at a spacing from the axis of rotation of the toothed part.

12. Gearing according to any of the preceding claims,
**characterised in that**
the number of ribs (1) is greater than 7,
and/or, when dependent on any of claims 5-7, **in that**
the housing part (2) is formed in one piece, in particular as one part, including the cylindrical internal wall (7), the parallelepiped-shaped external wall region, the dome regions (3, 9), the wall regions (4) and the flange region (8).

13. Gearing according to claims 5-7, or according to claim 12 when dependent on any of claims 5-7,
**characterised in that**
the spatial region enclosed by the cylindrical internal wall (7) is at least partly filled with oil, the spatial region between the cylindrical internal wall (7) and the parallelepiped-shaped external wall region being sealed off from the spatial region that is at least partly filled with oil and enclosed by the cylindrical internal wall (7).

## Revendications

1. Transmission comprenant une partie logement (2),
la partie logement (2) présentant une paroi intérieure cylindrique (7) qui entoure de manière radiale une roue, en particulier une partie denture, telle qu'une roue dentée, reliée de manière solidaire en rotation à l'arbre de sortie de la transmission,
des nervures (1), qui sont espacées les unes des autres, en particulier de manière régulière, dans la direction circonférentielle, qui font saillie de manière radiale vers l'intérieur et qui s'étendent de manière axiale, étant formées au niveau de la paroi intérieure cylindrique (7),
les nervures (1) s'étirant en particulier davantage en longueur dans la direction axiale que dans la direction circonférentielle et dans la direction radiale, la transmission présentant une partie de couvercle (31) avec une saillie annulaire (32), et une surface d'étanchéité (5) se raccordant à la paroi intérieure cylindrique (7),
**caractérisée en ce que**
la surface d'étanchéité (5) est réalisée sous la forme d'une section de surface conique, une bague d'étanchéité (30) étant enfilée sur la saillie annulaire (32) de la partie couvercle (31) et étant limitée de manière axiale par les nervures (1), en particulier par la face frontale des nervures (1),
la bague d'étanchéité (30) s'appuyant contre la surface d'étanchéité (5) après la mise en place et la connexion de la partie couvercle (31) avec la partie logement (2), de sorte que la bague d'étanchéité (30) est pressée par la partie couvercle (31) sur la partie logement (2),
la bague d'étanchéité (30) étant limitée de manière axiale par la partie couvercle (31) sur son côté axialement opposé aux nervures (1), en particulier de sorte que la bague d'étanchéité (30) n'est limitée de manière axiale qu'au niveau de positions angulaires circonférentielles espacées les unes des autres dans la direction circonférentielle, et **en ce que**
l'épaisseur de paroi maximale, mesurée dans la direction circonférentielle, d'une ou de plusieurs des nervures (1) présente un maximum local qui est fonction de la position axiale et/ou qui est fonction de la distance, mesurée dans la direction axiale, par rapport à la surface d'étanchéité (5) et/ou par rapport à la bague d'étanchéité (30),
la position axiale dudit maximum d'épaisseur de paroi se trouvant dans la région axiale qui est couverte par la partie denture, en particulier le pignon, qui est en prise avec la roue et qui est reliée de manière solidaire en rotation à l'arbre d'entrée de la transmission.

2. Transmission selon la revendication 1,
**caractérisée en ce que**
l'axe de symétrie de rotation de la section de surface conique est orienté de manière coaxiale par rapport à l'axe de rotation de l'arbre de sortie.

3. Transmission selon l'une quelconque des revendications précédentes,
**caractérisée en ce que**
la région couverte par les nervures (1) dans la direction axiale se raccorde à la région couverte par la surface d'étanchéité (5) dans la direction axiale ou est espacée par rapport à celle-ci, mais en particulier ne recouvre pas la région couverte par la surface d'étanchéité (5) dans la direction axiale.

4. Transmission selon l'une quelconque des revendications précédentes,
**caractérisée en ce que**
la saillie annulaire (32) présente une région de surface conique,
la saillie annulaire (32) présentant en particulier une région de surface conique extérieure qui repose sur la surface d'étanchéité conique intérieure (5),
l'axe de symétrie de rotation de la région de surface conique extérieure étant orienté de manière coaxiale par rapport à l'axe de symétrie de rotation de la surface d'étanchéité conique intérieure (5).

5. Transmission selon l'une quelconque des revendications précédentes,
**caractérisée en ce que**
la paroi intérieure cylindrique (7) est entourée radialement par une paroi extérieure parallélépipédique de la partie logement (2),
les régions de paroi (4) étant agencées entre la paroi intérieure cylindrique (7) et la paroi extérieure parallélépipédique, les régions de paroi (4) étant reliées à la paroi intérieure cylindrique (7) et étant reliées à la paroi extérieure parallélépipédique.

6. Transmission selon la revendication 5,
**caractérisée en ce que**
la distance radiale entre la paroi intérieure cylindrique (7) et la paroi extérieure parallélépipédique est variable, en particulier variable périodiquement, dans la direction circonférentielle entre zéro et une valeur maximale.

7. Transmission selon l'une quelconque des revendications 5 à 6,
**caractérisée en ce que**
des premières régions de dôme (3, 9), dans lesquelles respectivement un alésage axial traversant la partie logement (2) est inséré ou un alésage fileté axial, en particulier un alésage borgne, est inséré, sont formées au niveau des premières régions de paroi (4).

8. Transmission selon l'une quelconque des revendications 5 à 7,
**caractérisée en ce que**
la région axiale couverte par la paroi extérieure parallélépipédique comprend la région axiale couverte par la paroi intérieure cylindrique (7).

9. Transmission selon l'une quelconque des revendications précédentes,
**caractérisée en ce que**
une région de bride, à laquelle peut être relié un moteur électrique d'entraînement, est formée au niveau de la partie logement (2), la région d'espace intérieur entourée par la région de bride (8) débouchant à travers un évidement (6) dans la région d'espace intérieur entourée par la paroi intérieure cylindrique (7).

10. Transmission selon la revendication 9,
**caractérisée en ce que**
un arbre d'entrée de la transmission, entraîné par le moteur électrique, y compris une partie denture, en particulier un pignon, reliée de manière solidaire en rotation au dit arbre, fait saillie vers la roue de sortie,
la denture de la partie denture étant en particulier en prise avec la denture de la roue, la roue étant en particulier reliée de manière solidaire en rotation à l'arbre de sortie de la transmission.

11. Transmission selon l'une quelconque des revendications précédentes,
**caractérisée en ce que**
l'axe de rotation de la roue est orienté perpendiculairement et/ou se trouve à distance de l'axe de rotation de la partie denture.

12. Transmission selon l'une quelconque des revendications précédentes,
**caractérisée en ce que**
le nombre des nervures (1) est supérieur à 7,
et/ou, lorsque la présente revendication dépend de l'une quelconque des revendications 5 à 7, la partie logement (2) comprenant la paroi intérieure cylindrique (7), la région de paroi extérieure parallélépipédique, les régions de dôme (3, 9), les régions de paroi (4) et la région de bride (8) sont réalisées d'une seule pièce, en particulier d'un seul tenant.

13. Transmission selon les revendications 5 à 7, ou selon la revendication 12, lorsqu'elle dépend de l'une quelconque des revendications 5 à 7,
**caractérisé en ce que**
la région d'espace entourée par la paroi intérieure cylindrique (7) est au moins partiellement remplie d'huile,
la région d'espace présente entre la paroi intérieure cylindrique (7) et la région de paroi extérieure parallélépipédique étant étanche par rapport à la région d'espace qui est entourée par la paroi intérieure cylindrique (7) et est au moins partiellement remplie d'huile.
